## Europäisches Patentamt

## European Patent Office

## Office européen des brevets

(11) Publication number: **0 235 069**
**B1**

# (12) EUROPEAN PATENT SPECIFICATION

(45) Date of publication of patent specification: **22.11.90**

(21) Application number: **87500005.1**

(22) Date of filing: **26.02.87**

(51) Int. Cl.⁵: **F 16 B 12/50**

(54) Assembly pieces for metallic carpentry sections.

(30) Priority: **27.02.86 ES 292590**

(43) Date of publication of application:
**02.09.87 Bulletin 87/36**

(45) Publication of the grant of the patent:
**22.11.90 Bulletin 90/47**

(84) Designated Contracting States:
**AT BE CH DE FR GB GR IT LI LU NL SE**

(56) References cited:
**DE-U-1 831 354**
**FR-A-1 454 278**
**FR-A-2 294 353**
**GB-A- 850 539**
**US-A-2 904 360**
**US-A-3 877 138**

(73) Proprietor: **Perez Cidre, Isabel**
**C. del Lauro Parque de La Coruna**
**Villalba(Madrid) (ES)**

(72) Inventor: **Perez Cidre, Isabel**
**C. del Lauro Parque de La Coruna**
**Villalba(Madrid) (ES)**

(74) Representative: **Naranjo Marcos, Maria Antonia**
**Paseo de la Habana 200**
**E-28036 Madrid (ES)**

Courier Press, Leamington Spa, England.

## Description

The invention relates to an assembly part according to the first portion of Claim 1. Such assembly parts are used to assemble metal sections and are specially designed for shaping angles and edges. They can be used to build furniture, dividing walls or any other structure built from metal sections.

A known assembly part of this kind (DE—U—1 831 354) comprises a frame constituted by cross shaped sections joined with corner parts with boltholes (13) for the securing of a machine bolt. The known assembly part comprises a mounting element with a T-shaped cross-section arranged beside the prismatic shaped angular element.

It is an object of the present invention to provide an assembly part as described above which:

enables easy combination of angles made of different materials and finishes,

allows for quick manufacturing,

permits perfect assembly of parts,

permits easy replacement of parts, since they are quickly assembled and coupled.

This object is accomplished by the features of the characterizing portion of Claim 1.

Claim 2 relates to a preferred embodiment of the present invention.

In order to properly understand the invention, the following description is given with reference to the accompanying drawings, wherein:

Figure 1 shows a prismatic edge finish.

Figure 2 is a 90° assembly angle.

Figure 3 is a projected portion of the longitudinal section.

Figure 4 is a portion of the angular assembly member seen in Figure 2.

Figure 5 is a top view portion of the above.

In conformance with the attached designs, this embodiment relates to a single angular section, whose lateral peripheral surface is polyhedral (1) made up of two parallel flat faces (4) bound within themselves, by a side, made up of inclined surfaces (2) that follow in order forming an angle, through their ribs (3). The angular section may be joined by any conventional means to a cylindrical section (5) that constitutes a bearing or union support.

This section connects sidelong in other longitudinal sections by means of a 90° angle flange (6) whose two sides end in U-shaped (7) rectangular arms with holes (8) close to their free ends.

These U-shaped arms are embedded in double T shaped hollows (10), that the lateral of a longitudinal section (9) presents, likewise, of polyhedral exterior surface coordinated with the angle. The hollows (10) serve as guides to the assembly (7) elements.

The aforementioned arms may be secured by means of through bolts or similar, through the orifices (8).

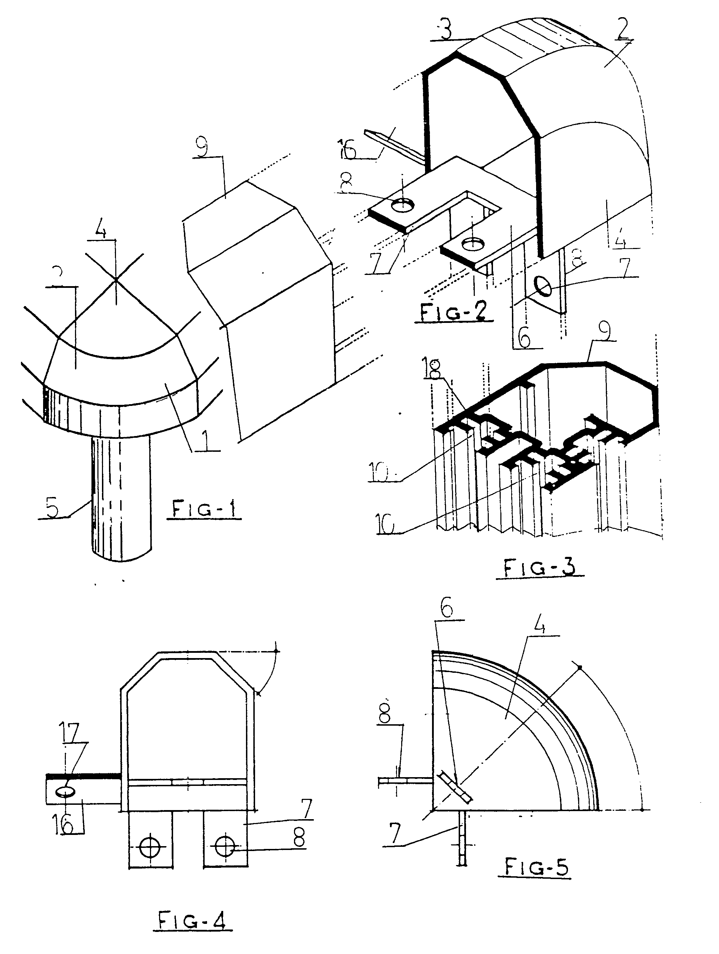

The angular section may have a projection made up of a flange (16) that could serve as a joint and/or support to the central plane. The longitudinal sections (Fig. 4) with a shape that projects towards the exterior in polyhedral (11) section, presents in its interior, some radial lodgings (12) to permit different assembly combinations.

In case the angular part is used in a flat union like a table, the sides end up in two parallel planes between themselves (4) in whose angle the angular flange (6) whose arms (7) end up in U, is attached by any conventional means.

## Claims

1. Assembly part for the assembly of metallic carpentry sections, comprising an angular element (1) with a prismatic shaped outer section made up of a circumferential surface (3), two inclined surfaces (2) adjacent the circumferential surface (3) and two parallel flat planes (4) adjacent and inclined relative to the inclined surfaces (2), further comprising a mounting element (7) with two perpendicular arms projecting from the angular element (1) to be connected to the sections to be assembled, characterized in that the angular element (1) has a hollow inside surrounded by the circumferential and inclined surfaces (2, 3) and the planes (4), in that the mounting element (7) consists of a flat bar bent into a right angle and arranged at the hollow inside, and in that each arm of the mounting element (7), at its free end, has U-shaped tips with an opening (8) near the end of each tip.

2. Assembly part according to Claim 1, characterized in that it further comprises a support element (16) projecting from one of the planes (4).

## Patentansprüche

1. Verbindungsteil zur Mongage von Metallschreinereielementen, welche aus einem Winkelstück (1) mit einem Aussenabschnitt in Form eines Prismas, gebildet von einer Kreisfläche (3), zwei an dieser Kreisfläche (3) anliegenden geneigten Flächen (2) und zwei parallelen Ebenen und Ebenen (4) bestehen, die in Bezug auf die geneigten Flächen (2) anliegen und geneigt sind, wobei ausserdem ein Montageteil (7) mit zwei senkrechten Armen vorgesehen ist, welche vom Winkelstück (1) ausgehen und an die zu verbindenden Abschnitte angeschlossen werden, dadurch gekennzeichnet, dass das Winkelstück (1) in seinem Innern einen von den Kreisflächen und Schrägflächen (2 und 3) und den Ebenen (4) umgebenen Hohlraum aufweist, dass das Montageteil (7) aus einer flachen, rechtwinklig abgebogenen Stange besteht, die in den Innenraum eingesetzt wird und dass jeder Arm des Montageteils (7) an seinem freien Ende U-förmige Spitzen mit einer Öffnung (8) in der Nähe eines jeden Spitzenendes besitzt.

2. Verbindungsteil nach Anspruch 1, dadurch gekennzeichnet, dass ausserdem ein Stützelement (16) vorgesehen ist, das von einer der Ebenen (4) ausgeht.

**Revendications**

1. Partie d'assemblage pour l'assemblage de sections de menuiserie métallique qui comportent un élément angulaire (1) avec une section extérieure en forme de prisme, constituée par une surface circonférencielle (3), deux surfaces inclinées (2) adjacentes à la surface circonférencielle (3) et deux plans parallèles et plats adjacents (4) et inclinés relatifs aux surfaces inclinées (2) comprenant de plus un élément de montage (7) avec deux bras perpendiculaires qui se projettent à partir de l'élément angulaire (1) pour être branchés sur les sections qui doirent être assemblées, sa caractéristique est que l'élément angulaire (1) a à l'intérieur un vide entouré par les surfaces circonférencielles et inclinées (2) et (3) et les plans (4) sur lequel l'élément de montage (7) consiste en une barre plate pliée en angle droit et placée sur le vide intérieur, et sur lequel chaque bras de l'élément de montage (7) a sur son extrémité libre, des pointes en forme de U avec une ouverture (8) près du bout de chaque pointe.

2. Partie d'assemblage concordant avec la Revendication 1, dont la caractéristique est qu'elle comprend de plus un élément de support (16) qui se projette à partir de l'un des plans (4).

FIG-1

FIG-2

FIG-3

FIG-4

FIG-5

1